# EUROPEAN PATENT APPLICATION

(11) **EP 4 556 329 A1**
(43) Date of publication of application: **21.05.2025**
(21) Application number: 24213328.8
(22) Date of filing: 15.11.2024
(51) Int. Cl.: B60T 13/68, B60T 13/66

(54) **IMPROVED BRAKING SYSTEM FOR A WORK VEHICLE, CONTROL METHOD THEREOF AND RELATED WORK VEHICLE**

(30) Priority: 20.11.2023 IT 202300024552
(71) Applicant: CNH Industrial Italia S.p.A., 10156 Torino (IT)
(72) Inventor: Cristofori, Davide, 10156 Turin (IT); Leati, Eugenio, 10156 Turin (IT)
(74) Representative: CNH Industrial IP Department

(57) **Abstract**

There is described a hydraulically actuated braking system (2, 200, 300, 400) for a work vehicle (1) comprising two hydraulically actuated braking assemblies (4a, 4b); two braking input devices (6a, 6b), which are operatively connected to the hydraulically actuated braking assemblies (4a, 4b); and a hydraulic arrangement (8), which is fluidly connected to the first (4a) and to the second hydraulically actuated braking assembly (4b), and is configured to provide, on command, a flow of pressurized hydraulic fluid to the first (4a) and to the second hydraulically actuated braking assembly (4b). The hydraulic arrangement (8) comprises a valve arrangement (12), which is fluidly interposed between a source of pressurized hydraulic fluid (10) and the first (4a) and the hydraulically actuated braking assembly (4b). The valve arrangement (8) comprises a control stage (15) configured to control the pressure of the hydraulic fluid provided towards the first (4a) and the second hydraulically actuated braking assembly (4b), and an operation mode stage (17) operable in a differential braking configuration or in a latched braking configuration.

## Description

### TECHNICAL FIELD

The present invention relates to an improved braking system for a work vehicle, in particular for an agricultural vehicle such as a tractor, to its control method and to a related work vehicle.

The present invention finds its preferred, although not exclusive, application in differential braking system for an agricultural vehicle.

Reference will be made to this application by way of example below, without however losing in generality.

### BACKGROUND OF THE INVENTION

As is known, the braking system of an agricultural vehicle such as a tractor generally comprises a left braking assembly carried by a left wheel and a right braking assembly carried by a right wheel.

Traditionally, such braking assemblies are operated by two corresponding brake pedals, which are arranged within the driver's cab and are each operable to actuate a corresponding braking assembly.

More in detail, in a first mode of operation, generally known as latched braking, the two pedals are mechanically latched to each other such that the operator cannot brake a single wheel independently from the other. Such operation mode is mandatory on the road and/or above a certain speed, in order to obtain a safe and balanced longitudinal braking and avoid instabilities, which could even lead to a vehicle roll over.

In a second mode of operation, also known as differential braking, the two brake pedals are released from each other and are operable independently one from the other. In such operation mode, therefore, the driver may operate only one braking assembly to reduce the turning radius of the work vehicle. This is particularly useful, for example, when performing a U-turn at the end of a field.

In modern electro-hydraulically actuated braking system for work vehicles, latching of the two pedals may also be performed at hydraulic levels by means of a dedicated valve arrangement.

Despite being a simple and effective systems, the current latching systems do not meet the safety requirements required in most modern and sophisticated work vehicles and moreover are not suited to be equipped on autonomous vehicles.

In view of the above, the need is felt for an improvement in the electro-hydraulic braking systems for work vehicles, in particular in order to provide differential braking capability and at the same time increase the safety of such braking systems.

In addition, the need is felt to provide an improved electro-hydraulic braking system, which is suitable for being equipped on both autonomous and non-autonomous work vehicles.

Aim of the present invention is to satisfy the above-mentioned needs in a cost effective and optimized manner.

### SUMMARY OF THE INVENTION

The aforementioned aims are reached by a braking system, by a method and by a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings, wherein:

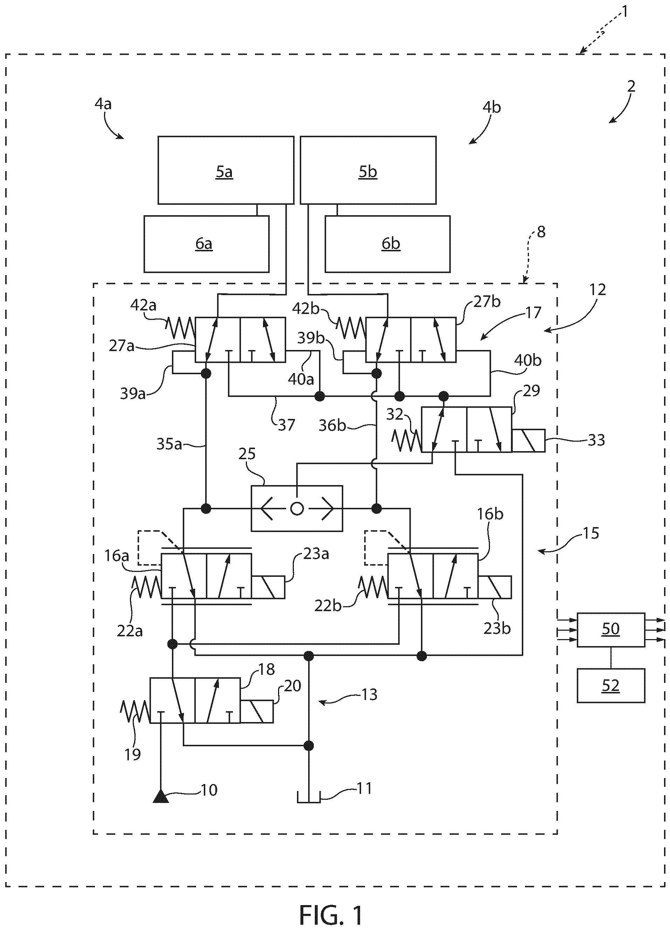

- Figures 1 to 4 are schematic representations of as many embodiments of a work vehicle according to the present invention, with parts removed for clarity.

### DETAILED DESCRIPTION OF THE INVENTION

With reference to the schematic representation of Figure 1, number 1 denotes as a whole a work vehicle, in particular an agricultural vehicle such as a tractor.

As generally known, work vehicle 1 comprises a powertrain assembly, which is carried by a work vehicle body and is adapted to provide torque to allow motion of the vehicle body with respect to the ground, e.g. thanks to at least one pair of wheels or tracks (not illustrated).

In particular, the powertrain assembly may comprise an engine, such as an internal combustion engine, preferably a diesel-powered or a methane-powered internal combustion engine.

In addition, the powertrain assembly preferably comprises also a drivetrain assembly or transmission assembly, which is operatively interposed between the engine and at least one pair of ground-engaging wheels, in order to transmit torque to the same ground-engaging wheels to allow motion of the work vehicle with respect to the ground.

In addition, work vehicle 1 comprises a hydraulically actuated braking system 2, which is operatively coupled to the ground engaging wheels of the work vehicle 1 and is configured to exert a braking torque on these latter during deceleration and/or retarding operation of work vehicle 1.

More in detail, braking system 2 comprises a first hydraulically actuated braking assembly 4a, which is coupled to a first wheel of work vehicle 1, and a second hydraulically actuated braking assembly 4b, which is coupled to a second wheel of work vehicle 1.

Preferably, first braking assembly 4a is coupled to a left wheel of work vehicle 1, and second braking assembly 4a is coupled to a right wheel of work vehicle 1.

As per se known, braking assemblies 4a and 4b each preferably comprises a braking device, such as brake disks or brake drums, which is carried by a corresponding ground-engaging wheel of work vehicle 1 and is adapted to exert the same ground-engaging wheel a braking torque.

In addition, as per se known and therefore not described in detail, preferably braking assemblies 4a and 4b respectively comprises a first braking valve 5a and a second braking valve 5b, exemplarily power brake valves, each of which is operatively coupled to a corresponding braking cylinder and to a corresponding braking device, in order to actuate the latter.

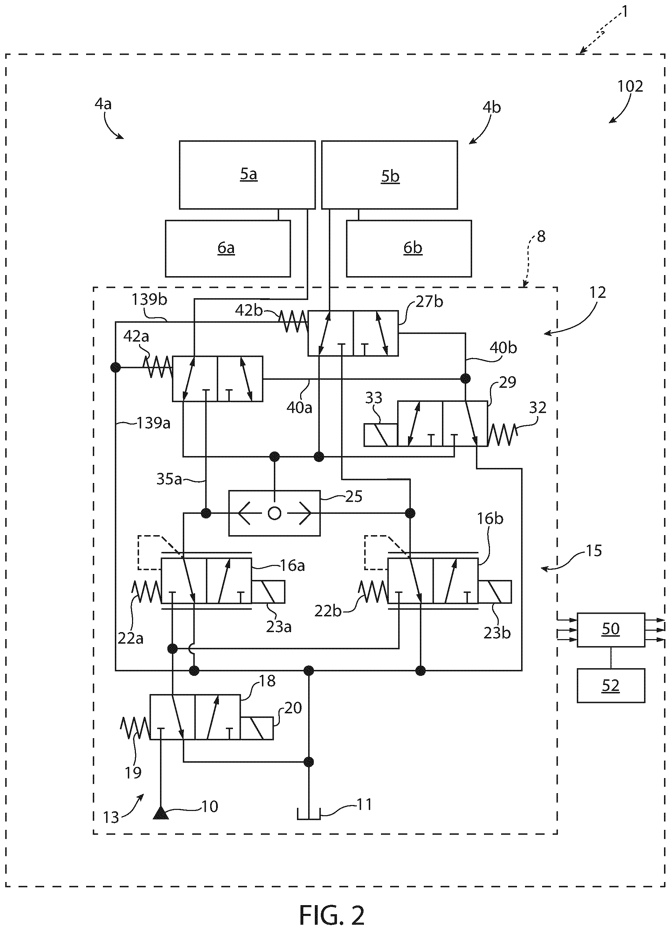

With reference to the exemplary embodiment illustrated in Figure 2, in addition, braking system 2 may comprise a first braking input device 6a, in particular a first braking pedal, which is operatively connected to the first braking assembly 4a, in particular to the first braking actuator 5a, to control its operation.

For example, first braking input device 6a may be configured to be operated in order to operate the first braking assembly 4a and to actuate the corresponding first braking device.

In addition, braking system 2 may comprise a second braking input device 6b, in particular a second braking pedal, which is operatively connected to the second braking assembly 4b, in particular to the second braking actuator 5b, to control its operation.

For example, second braking input device 6b may be configured to be operated in order to operate the second braking assembly 4b and to actuate the corresponding second braking device.

With reference to the exemplary embodiment illustrated in Figure 1, braking system 2 further comprises a hydraulic arrangement 8, which is operatively connected to hydraulically actuated braking assemblies 4a and 4b and is configured to be able to supply, on command, a flow of pressurized hydraulic fluid to the same braking assemblies 4a and 4b. This, during use, allows to increase the pressure exerted by the braking actuators 5a and 5b on the respective braking device and therefore to increase the braking effort, as per se known.

More in detail, hydraulic arrangement 8 comprises a source of pressurized hydraulic fluid 10. The source of pressurized hydraulic fluid 10, in particular, may comprise a hydraulic pump carried by the engine of work vehicle 1.

In addition, hydraulic arrangement 8 further comprises a valve arrangement 12, which is fluidly interposed between the source of pressurized hydraulic fluid 10 and the hydraulically actuated braking assemblies 4a and 4b, and is configured to control the flow of pressurized hydraulic fluid provided to these latter by the same source of pressurized hydraulic fluid 10.

With reference to the exemplary embodiment illustrated in Figure 1, in particular, valve arrangement 12 comprises a plurality of stages arranged in series one downstream the other.

More in detail, valve arrangement 12 preferably comprises an input stage 13, which is arranged downstream the source of pressurized hydraulic fluid 10 and is configured to selectively fluidly connect the same source of pressurized hydraulic fluid 10 with the braking assemblies 4a and 4b.

In particular, input stage 13, in a first operation condition is preferably configured to fluidly connect the source of pressurized hydraulic fluid 10 with the braking assemblies 4a and 4b.

In a second operation condition, on the other hand, input stage 13 is preferably configured to fluidly decouple the source of pressurized hydraulic fluid 10 from the braking assemblies 4a and 4b.

In addition, valve arrangement 12 comprises a control stage 15, which is arranged downstream the source of pressurized hydraulic fluid 10 and is configured to control the pressure of the hydraulic fluid provided towards the braking assemblies 4a and 4b according to operation of the first 6a and the second braking input device 6b.

More in detail, control stage 15 is preferably arranged downstream input stage 13.

With reference to the exemplary embodiment illustrated in Figure 1, control stage comprises a first control valve 16a, which is configured to control the pressure of the hydraulic fluid provided towards the first 4a and/or the second braking assembly 4b.

With reference to the exemplary embodiment illustrated in Figure 1, control stage further comprises a second control valve 16b, which is configured to control the pressure of the hydraulic fluid provided towards the first 4a and/or the second braking assembly 4b.

In addition, valve arrangement 12 comprises an operation mode stage 17, which is arranged downstream the control stage 15 and is configured to control the flow of pressurized hydraulic fluid provided by the control stage towards the braking assemblies 4a and 4b.

In a first operation configuration, also referred to as latched braking configuration, operation mode stage 17 is configured to connect the first 16a and/or the second control valve 16b to the first 4a and the second braking assembly 4b, such that the pressure of the hydraulic fluid provided towards the same first 4a and the second braking assembly 4b is substantially the same.

In other words, in the latched braking configuration, operation mode stage 17 is configured to connect the first 16a and/or the second control valve 16b to the first 4a and the second braking assembly 4b, such that the difference in the pressure of the hydraulic fluid provided towards the first 4a and the second braking assembly 4b is lower than a predetermined threshold, so that the braking torque exerted by the first 4a and the second braking assembly 4b is substantially the same.

More in detail, the operation mode stage 17 is configured such that, when the difference between the pressure of the hydraulic fluid provided at outlet by control valve 16a and the pressure of the hydraulic fluid provided at outlet by control valve 16a is lower than said predetermined threshold, it fluidly connects the first control valve 16a to the first braking assembly 4a and the second control valve 16b to the second braking assembly 4b.

On the other hand, when the difference between the pressure of the hydraulic fluid provided at outlet by control valve 16a and the pressure of the hydraulic fluid provided at outlet by control valve 16a is above said predetermined threshold, the operation mode stage 17 is configured to fluidly connect the valve between control valves 16a and 16b which outputs the hydraulic fluid with the highest pressure with both the first braking assembly 4a and the second control valve 16b to the second braking assembly 4b.

In a second operation configuration, also referred to as differential braking configuration, operation mode stage 17 is configured to fluidly connect the first control valve 16a to the first braking assembly 4a and the second control valve 16b to the second braking assembly 4b so that the first 4a and the second braking assembly 4b may be operated one independently from the other.

In particular, in the differential braking configuration, operation mode stage 17 is configured to fluidly connect the first control valve 16a to the first braking assembly 4a and the second control valve 16b to the second braking assembly 4b so that different hydraulic pressure may be exerted on the first 4a and the second braking assembly 4b, to obtain a different braking effort on the two ground engaging wheels of work vehicle 1.

More in detail, in the differential braking configuration, operation mode stage 17 is preferably configured to fluidly connect the first control valve 16a only to the first braking assembly 4a and the second control valve 16b only to the second braking assembly 4b.

In other words, in the differential braking configuration, operation mode stage 17 is preferably configured to not fluidly connect first control valve 16a to second braking assembly 4b and/or second control valve 16b to first braking assembly 4a.

Preferably, input stage 13, control stage 15 and/or operation mode stage 17 are electronically actuated, as explained more in detail below.

With reference to the exemplary embodiment illustrated in Figure 1, in particular, the input stage preferably comprises an input valve 18, which is arranged downstream the source of pressurized hydraulic fluid 10 and is configured to selectively connect the same source of pressurized hydraulic fluid 10 with the braking apparatuses 4a and 4b.

Input valve 18 is preferably an on/off valve, in particular an on/off solenoid-controlled valve. Preferably, input valve 18 is a shut off valve.

In addition, input valve 18 is preferably a three-way two-position hydraulic valve. The two inlet of the input valve 18 are preferably connected respectively to the source of pressurized hydraulic fluid 10 and to a tank 11, while the outlet of input valve 18 is fluidly connected to the control stage 15 arranged downstream.

In a first position, input valve 18 is preferably configured to fluidly decouple the source of pressurized hydraulic fluid 10 with the control stage 15 and to fluidly connect control stage 15 to tank 11.

In a second position, input valve 18 is preferably configured to fluidly connect the source of pressurized hydraulic fluid 10 with the control stage 15.

In addition, input valve 18 preferably comprises biasing means 19 configured to bias the same input valve 18 in the first position, and preferably a solenoid 20 operable to arrange the same input valve 18 in the second position.

With reference to the exemplary embodiment illustrated in Figure 1, in addition, first 16a and second control valve 16b are preferably solenoid-controlled proportional valves.

More in detail, first 16a and second control valve 16b are three-way two-position proportional valves.

The two inlets of first 16a and second control valve 16b are preferably connected respectively to the input stage 13 arranged upstream and to tank 11, while the outlet of first 16a and second control valve 16b is fluidly connected to the operation mode stage 17 arranged downstream.

In a first position, first 16a and second control valve 16b are each preferably configured to fluidly decouple the input stage 13 from the operation mode stage 17, in order to prevent the feeding of pressurized hydraulic fluid towards the operation mode stage 17, and to fluidly connect the operation mode stage 17 to tank 11.

In a second position, first 16a and second control valve 16b are each preferably configured to fluidly connect the input stage 13 from the operation mode stage 17, in order to provide the pressurized hydraulic fluid towards the operation mode stage 17.

In addition, first 16a and second control valve 16b preferably comprise corresponding biasing means 22a and 22b configured to bias the respective first 16a and second control valve 16b in the first position, and preferably solenoids 23a and 23b operable to arrange the corresponding first 16a and second control valve 16b in the second position.

With reference to the exemplary embodiment illustrated in Figure 1, in addition, operation mode stage 17 preferably comprises a shuttle valve 25, which is arranged downstream the first 16a and the second control valves 16b.

In addition, operation mode stage 17 preferably comprises a first differential valve 27a, which is arranged upstream the first braking assembly 4a and a second differential valve 27b, which is arranged upstream the second braking assembly 4b.

Preferably, first 27a and second differential valve 27b are hydraulically operated valves.

In addition, the operation mode stage 17 preferably comprises a flow control valve 29, which is arranged downstream the control stage 15, is configured to control the flow of the hydraulic fluid from the control stage 15 towards the first 4a and the second braking assembly 4b, and is configured to control the actuation of the operation mode stage 17 in the first mode of operation or in the second mode of operation.

In particular, in the latched braking configuration, flow control valve 29 is arranged in its first position. In the differential braking configuration, flow control valve 29 is arranged in its second position.

More in detail flow control valve 29 is preferably operatively interposed between shuttle valve 25 and the first 27a and the second differential valve 27b.

With reference to the exemplary embodiment illustrated in Figure 1, shuttle valve 25 is preferably configured to provide at outlet the highest-pressure hydraulic fluid between the hydraulic fluid provided at outlet by first 16a and second control valve 16b.

More in detail, two inlets of shuttle valve 25 are preferably respectively fluidly connected to the outlet of first 16a and second control valve 16b via hydraulic lines 30a and 30b.

The outlet of shuttle valve 25, on the other hand, is preferably fluidly connected to flow control valve 29.

With reference to the exemplary embodiment illustrated in Figure 1, in addition, flow control valve 29 is preferably fluidly connected, on one side to the outlet of shuttle valve 25, and to the other side to the first 27a and the second differential valve 27b.

More in detail, flow control valve 29 is preferably a three-way two position valve. In addition, flow control valve 29 is preferably a solenoid-controlled valve.

The two inlets of flow control valve 29 are preferably connected respectively to the outlet of shuttle valve 25 and to tank 11, while the outlet of flow control valve 29 is preferably fluidly connected to the first 27a and second differential valve 27b arranged downstream.

In a first position, flow control valve 29 is preferably configured to fluidly connect the outlet of shuttle valve 25 with the first 27a and second differential valve 27b.

In a second position, flow control valve 29 is preferably configured to fluidly isolate the outlet of shuttle valve 25 from the first 27a and second differential valve 27b, and to connect the same first 27a and second hydraulically operated valve 27b to tank 11.

In addition, flow control valve 29 preferably comprises a biasing means 32 configured to bias the same flow control valve 29 in the first position, and preferably a solenoid 33 operable to arrange the same flow control valve 29 in the second position.

With reference to the exemplary embodiment illustrated in Figure 1, first 27a and second differential valve 27b are preferably fluidly interposed, on the one side, between control stage 15, i.e. respectively first control valve 16a and second control valve 16b, and flow control valve 29, and on the other side respectively first braking assembly 4a and second braking assembly 4b.

More in detail, first 27a and second differential valve 27b are preferably each a three-way two position valve.

The two inlets of first 27a and second differential valve 27b are preferably fluidly connected respectively to the outlet of first control valve 16a and second control valve 16b and to the outlet of flow control valve 29.

The outlet of first 27a and second differential valve 27b are preferably fluidly connected respectively to the first braking assembly 4a and to the second braking assembly 4b.

More in detail, the first inlets of first 27a and second differential valve 27b are preferably fluidly connected respectively to the outlet of first control valve 16a and second control valve 16b via a respective hydraulic line 35a and 35b.

In addition, the second inlets of first 27a and second differential valve 27b are preferably fluidly connected to the outlet of flow control valve via hydraulic line 37.

In a first position, first 27a and second differential valve 27b are preferably configured to fluidly connect the outlet of respectively first control valve 16a and secondo control valve 16b to the corresponding first 4a and second braking assembly 4b, in particular via the respective hydraulic line 35a and 35b.

In a second position, on the other hand, first 27a and second differential valve 27b are preferably configured to fluidly connect the outlet of flow control valve 29 to the first 4a and second braking assembly 4b, in particular via the hydraulic line 37.

With reference to the exemplary embodiment illustrated in Figure 1, in addition, operation mode stage 17 preferably further comprises pilot lines 39a and 39b, which are respectively fluidly connected to hydraulic lines 35a and 35b and are adapted to exert forces on a first side of respectively first 27a and second differential valve 27b adapted to arrange the same first 27a and second hydraulically controlled valve 27b in their first position.

In addition, operation mode stage 17 preferably further comprises pilot lines 40a and 40b, which are fluidly connected to hydraulic line 37 and are adapted to exert forces on a second side of respectively first 27a and second differential valve 27b opposite to their first side, in order to arrange the same first 27a and second differential valve 27b in their second position.

With reference to the exemplary embodiment illustrated in Figure 1, in addition, first 27a and second differential valve 27b are configured to set the above-mentioned threshold of operation mode stage 17.

Preferably, first 27a and second differential valve 27b further comprises biasing means 42a and 42b, which are adapted to bias the respective first 27a and second hydraulically controlled valve 27b towards their first position.

The above-mentioned threshold of operation mode stage 17, in particular, depends on the force exerted by the biasing means 42a and 42b on the respective first 27a and second differential valve 27b.

With reference to the exemplary embodiment illustrated in Figure 1, braking system 2 preferably further comprises an electronic control unit 50, which is electrically connected at least to control stage 15 and to operation mode stage 17 and comprises elaboration means configured to control their operation according to the control logic described more in detail in the following.

For instance, the electronic control unit 50 may be a vehicle control unit (VCU) of work vehicle 1 or may be separate and distinct from said vehicle control unit.

The electronic control unit 50 is configured to control the above cited elements of braking system 2 in an automatic way following a control logic, which can be deployed into a specific software code downloadable into the same electronic control unit 50, and is configured to execute the control method as described in the following.

In addition, braking system 2 may further comprise sensing means 52, which are configured to be operatively connected to braking input devices 6a and 6b and are adapted to acquire data/signals related to the operation of the latter.

For instance, sensing means 52 may comprise sensors, for example proportional sensors, carried by the first braking input device 6a and by the second braking input device 6b and configured to provide the electronic control unit 50 with an electric signal indicative of the commands applied by the work vehicle driver on the first braking input device 6a and/or on the second braking input device 6b.

Electronic control unit 50 is preferably electronically connected to sensing means 52 and is configured to control the operation of braking system 2 also on the basis of the commands imparted by the work vehicle 1 driver.

In particular, according to a possible embodiment, electronic control unit 50 may be configured to control the operation of first control valve 16a and/or of second control valve 16b of control stage 16 according to the signals provided by sensing means 52.

In addition or alternative, electronic control unit 50 may be configured to control the operation of first control valve 16a and/or of second control valve 16b of control stage 16 based on autonomous driving algorithms and/or the like.

The operation of the above-described braking system 2 is the following.

In a first mode of operation, also referred to as off configuration or disabled configuration, input stage 13 fluidly decouples the source of pressurized hydraulic fluid 10 from the first 4a and the second braking assembly 4b.

More in detail, in the off configuration, input valve 18 is arranged in the first position.

In a second mode of operation, also referred to as latched braking configuration, input stage 13 fluidly connects the source of pressurized hydraulic fluid 10 to the control stage 15 and the operation mode stage 17 downstream.

More in detail, in the latched braking configuration, input valve 18 is arranged in the second position.

In addition, in such an operation configuration, operation mode stage is arranged in its first operation configuration and fluidly connects the first control valve 16a and/or the second control valve 16b of control stage 16 to the first braking assembly 4a and to the second braking assembly 4b so that the pressure difference between the hydraulic fluid provided to the first 4a and to the second hydraulically actuated braking assembly 4b is below said predetermined threshold.

More in detail, in the latched braking configuration, control valve 29 is arranged in its first operation configuration and fluidly connects the output of shuttle valve 29 to the two differential valves 27a and 27b.

In particular, if the pressure difference between the hydraulic fluid provided at outlet by the first 16a and second control valve 16b is below the threshold set by the biasing means 42a and 42b of first 27a and second differential valve 27b, the forces exerted by the respective pairs of pilot lines 39a-40a and 39b-40b are balanced and therefore the first 27a and the second differential valve 27b are arranged in their first position, wherein the outlet of control valves 16a and 16b is directly fluidly connected to the respective differential valve 27a and 27b.

On the other hand, if the pressure difference between the hydraulic fluid provided at outlet by the first 16a and second control valve 16b is above the threshold set by the biasing means 42a and 42b of first 27a and second differential valve 27b, the forces exerted by the respective pairs of pilot lines 39a-40a and 39b-40b are not balanced and therefore the first 27a and the second differential valve 27b are arranged in their second position, wherein the outlet of the one between control valves 16a and 16b outputting the highest pressure is fluidly connected to both differential valve 27a and 27b via the shuttle valve 25.

In a third mode of operation, also referred to as differential braking configuration, input stage 13 fluidly connects the source of pressurized hydraulic fluid 10 to the control stage 15 and the operation mode stage 17 downstream.

More in detail, in the differential braking configuration, input valve 18 is arranged in the second position.

In addition, in such an operation configuration, operation mode stage is arranged in its first operation configuration and fluidly connects the first control valve 16a of control stage 16 to the first braking assembly 4a and the second control valve 16b of control stage 16 to the second braking assembly 4b.

In particular, in the differential braking configuration, control valve 28 is arranged in its second position, in order to fluidly connect the outlet of first control valve 16a to first hydraulically controlled valve 27a, and the outlet of second control valve 16b to second hydraulically controlled valve 27b.

In such operation configuration, the first 4a and the second braking assembly 4b can be operated independently to each other, according to the operation of the respective input braking device 6a and 6b.

According to the above operation, the present invention is further directed to a method for controlling the operation of braking system 2 as described above and comprising the following phases:
i) controlling input stage 2 to fluidly decouple the source of pressurized hydraulic fluid 10 from the first 4a and the second braking assembly 4b; or
ii) controlling input stage 2 to fluidly connect the source of pressurized hydraulic fluid to the control stage 15 and controlling the operation mode stage 17 in its first mode of operation; or
iii) controlling input stage 2 to fluidly connect the source of pressurized hydraulic fluid to the control stage 15 and controlling the operation mode stage 17 in its second mode of operation.

In addition, the method preferably further comprises the step of controlling the operation of first 16a and second control valve 16b according to the operation of the first 6a and the second braking input device 6b, i.e. on the basis of the commands imparted by the work vehicle driver through the first braking input device 6a and the second braking input device 6b.

In view of the foregoing, the advantages of a braking assembly, its control method and a related work vehicle according to the present invention are apparent.

At first, the proposed hydraulic arrangement 8, provides for automatic redundancy and so enhanced safety in case of failures of a single components.

In particular, the particular configuration of the operation mode stage 17 ensure a balanced and safe braking even in case of failures of single components, with automatic left-right compensation.

For instance, if the pressure of the hydraulic fluid provided at output by control valves 16a and 16b should differ considerably to each other, for example due to a failure of a single component or due to wear/degradation, the operation mode stage 17 is configured to balance the pressure of the hydraulic fluid provided to first 4a and second braking assembly 4b, to allow a safe and balanced braking action.

In addition, according to the proposed embodiment, the safety related to braking system 2 is massively increased. In particular, according to the proposed embodiment, it is very unlikely to accidentally engage the differential braking, as it is required to switch the operation mode stage 2 to its second mode of operation.

Moreover, being electronically controlled, it is possible to implement software routines to ensure that the differential braking maybe engaged only in safe conditions, for instance on the field and below a certain speed.

Lastly, being electronically controlled, the braking system 2 is particularly suitable for installation on autonomous vehicles or vehicles provided with driver assistance systems.

It is clear that modifications can be made to the described braking assembly, work vehicle and method which do not extend beyond the scope of protection defined by the claims.

For instance, Figure 2 shows an alternative embodiment of the braking assembly 102, which is similar to the braking system 2 and whose corresponding parts will be denoted with the same reference numbers as power-take-off assembly 2.

Braking assembly 102 distinguishes from braking assembly 6 in that differential valves 27a and 27b are not provided with the pilot lines 39a and 39b and in that the first side of differential valves 27a and 27b are directly fluidly connected to the outlet of input valve 18 via pilot lines 139a and 139b.

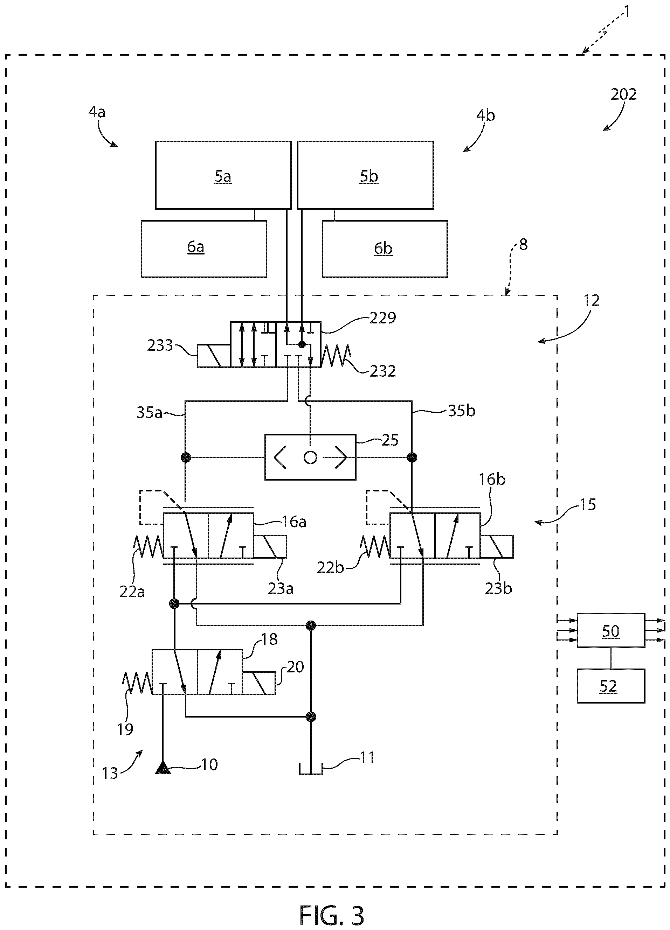

In addition, Figure 3 shows an alternative embodiment of the braking system 202, which is similar to the braking system 2 and whose corresponding parts will be denoted with the same reference numbers as braking system 2.

Braking system 202 distinguishes from braking assembly 6 in that operation mode stage 17 does not comprise the control valve 29 and the two differential valves 27a and 27b, but it comprises only one solenoid-controlled flow control valve 229.

Flow control valve 229 is preferably fluidly interposed between shuttle valve 25 and first 4a and second braking assembly 4b.

Flow control valve 229 preferably comprises two outlets and three inlets. Flow control valve 229 may be arranged in two different operative positions.

The three inlets of flow control valve 229 are preferably fluidly connected to the outlets of first 16a and second control valve 16b and to the outlet of shuttle valve 25.

The two outlets of flow control valve 229 are preferably fluidly connected to the first 4a and second braking assembly 4b.

In a first operative position, flow control valve 229 is preferably configured to fluidly connect the outlet of first control valve 16a to first braking assembly 4a and the outlet of second control valve 16b to second braking assembly 4b, and to fluidly decouple the outlet of shuttle valve 25 from first braking assembly 4a and from second braking assembly 4b.

In a second operative position, flow control valve 229 is preferably configured to fluidly decouple the outlet of first control valve 16a and the outlet of second control valve 16b from first braking assembly 4a and from second braking assembly 4b, and to fluidly connect the outlet of shuttle valve 25 to both the first braking assembly 4a and the second braking assembly 4b.

In addition, flow control valve 229 preferably comprises biasing means 232 configured to bias the same flow control valve 229 in the first position, and preferably a solenoid 233 operable to arrange the same flow control valve 229 in the second position.

In the latched braking configuration, flow control valve 229 is arranged in its first position. In the differential braking configuration, flow control valve 229 is arranged in its second position.

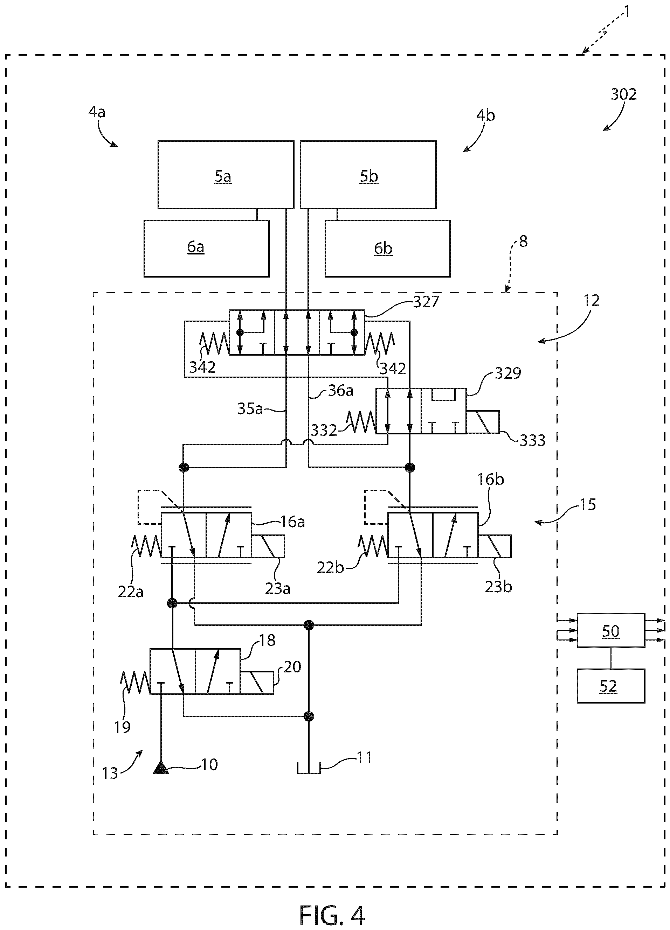

Lastly, Figure 4 shows an alternative embodiment of the braking system 302, which is similar to the braking system 2 and whose corresponding parts will be denoted with the same reference numbers as power-take-off assembly 2.

Braking assembly 302 distinguishes from braking assembly 6 in that operation mode stage 17 does not the two differential valves 27a and 27b, but it comprises only one differential valve 327.

Differential valve 327 is preferably a four-way three-position valve. Differential valve 327 is preferably hydraulically controlled.

The two inlets of differential valve 327 are preferably fluidly connected to the outlets of first 16a and second control valve 16b.

The two outlets of differential valve 327 are preferably fluidly connected to the first 4a and second braking assembly 4b.

In a first operative position, differential valve 329 is preferably configured to fluidly connect the outlet of first control valve 16a to first braking assembly 4a and the outlet of second control valve 16b to second braking assembly 4b.

In a second operative position, differential valve 329 is preferably configured to fluidly connect the outlet of first control valve 16a to both braking assemblies 4a and 4b and to fluidly decouple second control valve 16b from both braking assemblies 4a and 4b.

In a third operative position, differential valve 329 is preferably configured to fluidly connect the outlet of second control valve 16b to both braking assemblies 4a and 4b and to fluidly decouple first control valve 16a from both braking assemblies 4a and 4b.

Preferably, differential valve 329 comprises biasing means 342 configured to bias the same differential valve towards its first position.

In addition, according to the embodiment illustrated in Figure 4, braking assembly 302 distinguishes from braking assembly 6 in that operation mode stage 17 does not flow control valve 29, but it comprises a different flow control valve 329.

Flow control valve 329 is preferably a four-way two-position valve. Differential valve 327 is a solenoid-controlled valve.

The two inlets of flow control valve 329 are preferably fluidly connected to the outlets of first 16a and second control valve 16b.

The two outlets of flow control valve 329 are preferably fluidly connected to a first and a second side of differential valve 327 and are configured to exert forces adapted to arrange the same differential valve respectively in its second and third operative position.

In a first operative position, flow control valve 329 is preferably configured to fluidly connect the outlet of first control valve 16a to the first side of differential valve 327 and to fluidly connect the outlet of second control valve 16a to the second side of differential valve 327.

In the second operative position, flow control valve 329 is preferably configured to fluidly decouple the outlet of first control valve 16a and second control valve 16a from the sides of differential valve 327.

In addition, flow control valve 329 preferably comprises biasing means 332 configured to bias the same flow control valve 329 in the first position, and preferably a solenoid 333 operable to arrange the same flow control valve 329 in the second position.

In the latched braking configuration, flow control valve 329 is arranged in its first position. In the differential braking configuration, flow control valve 329 is arranged in its second position.

## Claims

1. A hydraulically actuated braking system (2, 102, 202, 302) for a work vehicle (1),
said hydraulically actuated braking system (2) comprising:
• a first hydraulically actuated braking assembly (4a), which is adapted to be coupled to a first ground engaging means of said work vehicle (1), to exert a braking torque said first ground engaging means;
• a second hydraulically actuated braking assembly (4b), which is adapted to be coupled to a second ground engaging means of said work vehicle (1), to exert a braking torque said second ground engaging means;
• a hydraulic arrangement (8), which is fluidly connected to said first hydraulically actuated braking assembly (4a) and to said second hydraulically actuated braking assembly (4b), and is configured to provide, on command, a flow of pressurized hydraulic fluid to said first hydraulically actuated braking assembly (4a) and to said second hydraulically actuated braking assembly (4b);
said hydraulic arrangement (8) comprising:
• a source of pressurized hydraulic fluid (10); and
• a valve arrangement (12), which is fluidly interposed between said source of pressurized hydraulic fluid (10) and said first (4a) and second hydraulically actuated braking assembly (4b);
said valve arrangement (12) comprising:
• a control stage (15), which is arranged downstream said source of pressurized hydraulic fluid (10) and comprises a first control valve (16a) configured to control the pressure of the hydraulic fluid provided towards said first (4a) and/or said second hydraulically actuated braking assembly (4b) and a second control valve (16b) configured to control the pressure of the hydraulic fluid provided towards said first (4a) and/or said second hydraulically actuated braking assembly (4b); and
• an operation mode stage (17), which is arranged downstream said control stage (15) and is operable, selectively and alternatively, in two different modes of operation, wherein in a first mode of operation, said operation mode stage (17) is configured to fluidly connect said first control valve (16a) and/or said second control valve (16b) to said first hydraulically actuated braking assembly (4a) and said second hydraulically actuated braking assembly (4b) so that the pressure difference between the hydraulic fluid provided to said first hydraulically actuated braking assembly (4a) and to said second hydraulically actuated braking assembly (4b) is below a predetermined threshold, and wherein in a second mode of operation, said operation mode stage (17) is configured to fluidly connect said first control valve (16a) to said first hydraulically actuated braking assembly (4a) and said second control valve (16b) to said second hydraulically actuated braking assembly (4b) so that said first hydraulically actuated braking assembly (4a) and said second hydraulically actuated braking assembly (4b) can be operated independently to each other.

2. Hydraulically actuated braking system according to claim 1, wherein said valve arrangement (12) further comprises an input stage (13), which is fluidly interposed between said source of pressurized hydraulic fluid (10) and said control stage (15) and is configured to selectively fluidly connect said source of pressurized hydraulic fluid (10) with said control stage (15).

3. Hydraulically actuated braking system according to claim 2, wherein said input stage (13) comprises a solenoid-controlled valve, configured to selectively fluidly connect said source of pressurized hydraulic fluid (10) with said control stage (15), in particular with said first control valve (16a) and said second control valve (16b).

4. Hydraulically actuated braking system according to claim 1, 2 or 3, wherein said first control valve (16a) and said second control valve (16b) are solenoid-controlled proportional valves.

5. Hydraulically actuated braking system according to any of the preceding claims, wherein said operation mode stage (17) comprises a flow control valve (29, 229, 329), which is arranged downstream said control stage (15), is configured to control the flow of the hydraulic fluid from said control stage (15) towards said first braking assembly (4a) and said second braking assembly (4b), and is configured to control the actuation of said operation mode stage (17) in said first mode of operation or in said second mode of operation.

6. Hydraulically actuated braking system according to claim 5, wherein said operation mode stage (17) further comprises a shuttle valve (25), which is arranged downstream said first control valve (16a) and said second control valve (16b) and is configured to fluidly connect, during use, the one between first control valve (16a) and second control valve (16b) providing at output the flow of hydraulic fluid with the highest pressure with said flow control valve (29).

7. Hydraulically actuated braking system according to claim 6, wherein said operation mode stage (17) further comprises:
a first differential valve (27a), which is operatively interposed between said control stage (15) and said first braking assembly (4a) and in a first position is configured to fluidly connect said first control valve (16a) with said first braking assembly (4a) and in a second position is configured to fluidly connect the outlet of said flow control valve (29) with said first braking assembly (4a)
a second differential valve (27b), which is operatively interposed between said control stage (15) and said second braking assembly (4b) and in a first position is configured to fluidly connect said second control valve (16b) with said second braking assembly (4b) and in a second position is configured to fluidly connect the outlet of said flow control valve (29) with said second braking assembly (4b).

8. Hydraulically actuated braking system according to claim 7, wherein said flow control valve (29) in a first position is configured to fluidly connect the outlet of said shuttle valve (25) with said first differential valve (27a) and said second differential valve (27b), and in a second position is configured to fluidly decouple said shuttle valve (25) from said first differential valve (27a) and said second differential valve (27b).

9. Hydraulically actuated braking system according to any of claims from 1 to 6, wherein said flow control valve (229) in a first position is configured to fluidly connect the outlet of said first control valve (16a) with said first braking assembly (4a) and the outlet of said second control valve (16b) with said second braking assembly (4b), and in a second position is configured to fluidly connect the outlet of said shittle valve (25) with said first braking assembly (4a) and with said second braking assembly (4b).

10. Hydraulically actuated braking system according to any of claims from 1 to 5, wherein said operation mode stage (17) comprises a four-way three-position differential valve (329) fluidly interposed between said control stage (15), said first braking assembly (4a) and said second braking assembly (4b) and:
in a first operative position, said differential valve (329) is configured to fluidly connect the outlet of said first control valve (16a) to said first braking assembly (4a) and the outlet of said second control valve (16b) to said second braking assembly (4b);
in a second operative position, said differential valve (329) is configured to fluidly connect the outlet of said first control valve (16a) to said first braking assembly (4a) and to said second braking assembly (4b); and
in a third operative position, said differential valve (329) is configured to fluidly connect the outlet of said second control valve (16b) to said first braking assembly (4a) and to said second braking assembly (4b).

11. A work vehicle (1) comprising a hydraulically actuated braking system realized according to any of the preceding claims.

12. A method for controlling a hydraulically actuated braking system realized according to any of claims from 2 to 10, the method comprising the steps of:
i) controlling said input stage (2) to fluidly decouple the source of pressurized hydraulic fluid (10) from the first second braking assembly (4a) and the second braking assembly (4b); or
ii) controlling said input stage (2) to fluidly connect the source of pressurized hydraulic fluid (10) to the control stage (15) and controlling the operation mode stage (17) in its first mode of operation; or
iii) controlling said input stage (2) to fluidly connect the source of pressurized hydraulic fluid (10) to the control stage (15) and controlling the operation mode stage (17) in its second mode of operation.
